# EUROPÄISCHE PATENTSCHRIFT

(11) **EP 3 234 756 B1**
(45) Veröffentlichungstag und Bekanntmachung des Hinweises auf die Patenterteilung: **06.12.2023**
(21) Anmeldenummer: 15790466.5
(22) Anmeldetag: 31.10.2015
(51) Int. Cl.: G06F 3/0488

(54) **VERFAHREN ZUM BETREIBEN EINER BEDIENVORRICHTUNG EINES KRAFTFAHRZEUGS BEI EINER MEHRFINGERBEDIENUNG**
METHOD FOR OPERATING AN OPERATOR CONTROL DEVICE OF A MOTOR VEHICLE IN MULTI-FINGER OPERATION
PROCÉDÉ PERMETTANT DE FAIRE FONCTIONNER UN DISPOSITIF DE COMMANDE DE VÉHICULE AUTOMOBILE EN CAS D'UNE COMMANDE À PLUSIEURS DOIGTS

(30) Priorität: 18.12.2014 DE 102014019040
(43) Veröffentlichungstag der Anmeldung: 25.10.2017
(73) Patentinhaber: Audi AG, 85045 Ingolstadt (DE)
(72) Erfinder: MÜLLER, Ulrich, 85055 Ingolstadt (DE); WACHINGER, Michael, 86571 Winkelhausen (DE); KRÄMER, Tim, 85117 Eitensheim (DE)
(74) Vertreter: Hofstetter, Schurack & Partner
(86) Internationale Anmeldenummer: PCT/EP2015/002192
(87) Internationale Veröffentlichungsnummer: WO 2016/096065

(56) Entgegenhaltungen:
- EP-A2- 1 522 007
- WO-A1-2014/105276
- DE-A1-102008 051 051
- US-A1- 2011 248 948

## Beschreibung

Die Erfindung betrifft ein Verfahren zum Betreiben einer Bedienvorrichtung eines Kraftfahrzeugs. Die Erfindung betrifft außerdem eine Bedienvorrichtung sowie ein Kraftfahrzeug.

Berührungssensitive Bedieneinheiten bzw. Touchpads sind bereits aus dem Stand der Technik bekannt und werden beispielsweise in Laptops verwendet, um Funktionen des Laptops zu steuern oder auszuwählen. So kann das Touchpad eine Position eines Fingers ermitteln, mit welchem ein Nutzer das Touchpad berührt, und damit eine Interaktion mit einem Bildschirminhalt des Laptops ermöglichen. Dazu kann beispielsweise ein Mauszeiger auf dem Bildschirm gesteuert werden, indem der Nutzer mit seinem Finger das Touchpad berührt. In der US 2011/0304550 A1 wird eine Bedieneinheit beschrieben, welche dazu ausgelegt ist, mehrere Eingabemethoden, beispielsweise eine Eingabe mit einem Finger oder einem Eingabestift, bereitzustellen und eine Konfiguration der Bedieneinheit an die momentane Eingabemethode anzupassen.

Zunehmend werden solche Touchpads auch in Kraftfahrzeugen eingesetzt, sodass ein Nutzer, beispielsweise der Fahrer des Kraftfahrzeugs, Funktionen des Kraftfahrzeugs, beispielsweise Infotainmentkomponenten, ein Navigationssystem oder ein Telefon, steuern kann. In der Regel weisen solche Touchpads eine derart große berührungssensitive Oberfläche auf, dass diese auch mit zwei oder mehreren Fingern berührt werden kann. Dies kann auch unbeabsichtigt erfolgen, wenn sich der Fahrer beispielsweise während der Fahrt auf das Führen des Kraftfahrzeugs konzentriert und das Touchpad dabei versehentlich mit mehr als einem Finger berührt. Dadurch können Abweichungen zwischen gewollter Eingabe und getätigter Eingabe auf dem Touchpad entstehen.

Auch ist aus dem Stand der Technik bekannt, Touchpads mit einer Kraftsensorik zu kombinieren, welche eine Fingerkraft des Nutzers, also einen Druck, den der Nutzer mit seinem Finger auf das Touchpad ausübt, ermittelt. Dazu ist beispielsweise in der DE 10 2008 051 051 A1 eine Bedieneinrichtung mit einer drucksensitiven Oberfläche gezeigt. Durch unterschiedlich starkes Drücken der drucksensitiven Oberfläche wird dort ein Vergrößerungsfaktor für die Darstellung einer Liste verändert.

Durch die Druckerfassung ist eine Funktionsauslösung über eine Betätigungskraft bzw. einen Betätigungsdruck möglich. Dies bedeutet, dass der Nutzer eine Funktion beispielsweise durch Gleiten über das Touchpad anwählen und durch Drücken die Funktion auswählen kann. Damit kann das Verhalten einer herkömmlichen mechanischen Taste simuliert werden. Erst beim Druck auf das Touchpad wird die jeweilige Funktion ausgelöst. Um den subjektiven Qualitätseindruck beim Betätigen weiterhin zu verbessern, kann ein mechanischer haptischer Impuls, beispielsweise eine Vibration, durch einen Aktuator erzeugt werden. Zusätzlich kann auch ein Ton, beispielsweise ein Klick-Geräusch, über einen Lautsprecher bei einer Betätigung erzeugt werden. Das Touchpad fühlt sich dadurch beim Betätigen nahezu wie eine mechanische Taste an.

Die WO 2014/105276 A1 zeigt ein elektronisches Gerät mit einer berührungsempfindlichen Oberfläche, einem Display und einem oder mehreren Sensoren zur Erkennung einer Intensität von Kontakten. Das elektronische Gerät erkennt einen Kontakt auf der berührungsempfindlichen Oberfläche und bestimmt einen Ort sowie eine Intensität des Kontaktes auf der berührungsempfindlichen Oberfläche. Außerdem zeigt das elektronische Gerät eine Antwort an, welche auf einer Eingabe-Ausgabe-Zuordnung der Intensität als Antwort auf die Kontaktstelle basiert.

Die DE 10 2008 051051 A1 offenbart ein Verfahren zum Anzeigen von Informationen in einem Fahrzeug, bei dem auf einer Anzeigefläche eine Teilmenge einer Gesamtinformation angezeigt wird, wobei die Größe der angezeigten Teilmenge von einem Vergrößerungsfaktor abhängt, mit dem die Teilmenge auf der Anzeigefläche angezeigt wird. Die angezeigte Teilmenge der Gesamtinformation wird durch einen Bedienvorgang eines Nutzers verändert, wobei die Größe der Veränderung der angezeigten Information von dem Bedienvorgang und von dem Vergrößerungsfaktor der angezeigten Information abhängt.

Die EP 1 522 007 A2 zeigt eine virtuelle Tastatur, die auf einem berührsensitiven Display ausgebildet sein kann. Für den Fall, dass ein Nutzer mehrere Finger gleichzeitig auf die virtuelle Tastatur legt, wird diejenige Taste ausgelöst, auf die der größte Auflegedruck ausgeübt wird.

Es ist Aufgabe der vorliegenden Erfindung, eine Lösung bereitzustellen, mittels welcher eine angenehmere und zuverlässigere Bedienung einer Bedienvorrichtung ermöglicht werden kann und mittels welcher Fehlbedienungen vermieden werden können.

Diese Aufgabe wird erfindungsgemäß durch ein Verfahren, eine Bedienvorrichtung sowie ein Kraftfahrzeug mit den Merkmalen gemäß den unabhängigen Patentansprüchen gelöst. Vorteilhafte Ausführungen der Erfindung sind Gegenstand der abhängigen Patentansprüche, der Beschreibung und der Figuren.

Ein erfindungsgemäßes Verfahren dient zum Betreiben einer Bedienvorrichtung eines Kraftfahrzeugs. Das Verfahren umfasst das Erfassen einer Anzahl von Objekten, mit welchen eine berührungssensitive Bedieneinheit gleichzeitig berührt wird. Außerdem umfasst das Verfahren das Bestimmen einer Position, an welcher im Falle nur eines berührenden Objektes die Bedieneinheit mit dem einen Objekt berührt wird, oder das Festlegen eines Auslöseobjektes sowie Bestimmen einer Position des Auslöseobjektes auf der berührungssensitiven Bedieneinheit in Abhängigkeit von jeweiligen Berührsignalen, welche im Fall von mehr als einem berührenden Objekt aufgrund der gleichzeitigen Berührung der Objekte erzeugt werden, wobei als das Auslöseobjekt aus der Anzahl an erfassten Objekten das Objekt ermittelt wird, dessen Berührungssignal die größte Änderung der Signalstärke aufweist. Darüber hinaus umfasst das Verfahren das Vorgeben eines Druckschwellwerts in Abhängigkeit der erfassten Anzahl der Objekte, das Erfassen eines Druckes, mit welchem die berührungssensitive Bedieneinheit beim Berühren insgesamt beaufschlagt wird, das Ermitteln, ob der erfasste Druck größer als der vorgegebene Druckschwellwert ist und das Auslösen einer der erfassten Position zugeordneten Funktion des Kraftfahrzeugs ausschließlich, falls der erfasste Druck größer als der vorgegebene Druckschwellwert ist.

Mittels der Bedienvorrichtung können Funktionen des Kraftfahrzeugs, beispielsweise Infotainmentfunktionen des Kraftfahrzeugs, durch einen Nutzer, insbesondere den Fahrer des Kraftfahrzeugs, ausgewählt und/oder ausgelöst und/oder gesteuert werden. Die Bedienvorrichtung weist eine berührungssensitive Bedieneinheit auf, welche beispielsweise als eine berührungssensitive Fläche bzw. als ein Touchpad ausgestaltet sein kann und welche mittels an sich bekannter Funktionsprinzipien eine Berührungsempfindlichkeit umsetzen kann.

Die berührungssensitive Bedieneinheit ist dazu ausgelegt, zu bestimmen, mit wie vielen Objekten die berührungssensitive Bedieneinheit gleichzeitig berührt wird. Die Objekte sind insbesondere Finger einer Hand, mit welchen der Nutzer die Bedienvorrichtung bedient, oder ein Handballen. Falls die berührungssensitive Bedieneinheit mit nur einem Objekt, z.B. mit nur einem Finger, berührt wird, so erkennt die berührungssensitive Bedieneinheit die Position des Objektes auf der berührungssensitiven Bedieneinheit. Falls die berührungssensitive Bedieneinheit mit mehr als einem Objekt, z.B. mehreren Fingern, berührt wird, so wird durch die berührungssensitive Bedieneinheit anhand von jeweiligen Berührsignalen der Objekte zuerst ermittelt, welches der Objekte zum Auslösen und/oder Auswählen und/oder Steuern der Bedienvorrichtung durch den Nutzer vorgesehen ist. Dieses Objekt wird als das Auslöseobjekt festgelegt. Außerdem wird die Position des Auslöseobjektes bestimmt. Dadurch kann erkannt werden, welches Objekt die Funktion auslösen und/oder auswählen und/oder steuern soll, falls der Nutzer versehentlich mehrere Objekte auf die berührungssensitive Bedienfläche legt. Es kann also das betätigende Objekt von den aufliegenden Objekten unterschieden werden.

Erfindungsgemäß wird als das Auslöseobjekt aus der Anzahl an erfassten Objekten das Objekt ermittelt, dessen Berührsignal die größte Änderung der Signalstärke aufweist. Hier wird vor allem eine Änderung der Signalstärke über der Zeit erfasst. Falls als das Berührsignal eine elektrische Kapazität erfasst wird, so wird eine Kapazitätsänderung über die Zeit erfasst. Da die Kapazität, wie bereits beschrieben, abhängig von einer Elektrodenfläche ist, so resultiert insbesondere eine Änderung der Elektrodenfläche in einer Änderung der Kapazität. Insbesondere ändert sich die Elektrodenfläche deswegen, weil sich eine Berührfläche des betätigenden Objektes und damit die Elektrodenfläche des betätigenden Objektes beim Berühren durch das "Plattdrücken" des Objektes vergrößert. Mit anderen Worten bedeutet dies, dass das Objekt eine geringere Elektrodenfläche zum Zeitpunkt des Berührens ausbildet, als zu einem fortgeschrittenen Zeitpunkt, an welchem der Nutzer das Objekt auf die berührungssensitive Bedieneinheit drückt.

In einer nicht beanspruchten Ausführungsform wird als das Auslöseobjekt aus der Anzahl an erfassten Objekten das Objekt ermittelt, dessen Berührsignal die größte Signalstärke aufweist. In der Regel übt der Nutzer auf die berührungssensitive Bedieneinheit mit dem Objekt an derjenigen Position das stärkste Berührsignal aus, welcher diejenige Funktion zugewiesen ist, die der Nutzer bedienen möchte. Dieses Objekt wird als das Auslöseobjekt festgelegt. Mit anderen Worten bedeutet dies, dass der Nutzer mit demjenigen Objekt am stärksten drückt, welches die Funktion bedienen soll. Die anderen Objekte liegen dabei insbesondere nur auf der berührungssensitiven Bedieneinheit auf. Falls als das Berührsignal eine elektrische Kapazität erfasst wird, so wird dasjenige Objekt als das Auslöseobjekt festgelegt, welches mit den Elektroden der berührungssensitiven Bedieneinheit die größte Kapazität ausbildet. Eine elektrische Kapazität ist insbesondere abhängig von einer Elektrodenfläche. Dabei weist in der Regel dasjenige Objekt die größte Elektrodenfläche auf, das am stärksten auf die berührungssensitive Fläche drückt und dabei "platt gedrückt" wird. Somit kann auf besonders einfache Weise das Auslöseobjekt, auch ohne eine lokale Absolutdruckmessung, identifiziert werden.

Darüber hinaus wird ein Druck, beispielsweise mittels eines Drucksensors, erfasst, welchen das Objekt oder die Objekte insgesamt auf die berührungssensitive Bedieneinheit ausüben. Insbesondere wird ein Gesamtdruck erfasst, d.h. auch bei mehr als einem berührenden Objekt wird derjenige Druck ermittelt, den alle Objekte auf die berührungssensitive Bedieneinheit ausüben. Es ist also in vorteilhafter Weise nicht notwendig, mehrere Drucksensoren vorzusehen, welche lokal den Druck bestimmen, den jedes Objekt einzeln auf die berührungssensitive Bedieneinheit ausübt. Dadurch ist das Verfahren besonders einfach gestaltet, da lediglich das Signal eines Drucksensors verarbeitet werden muss.

Außerdem ist vorgesehen, dass die der ermittelten Position zugeordnete Funktion nur dann ausgelöst wird, wenn der erfasste Druck einen vorgegebenen Druckschwellwert überschreitet, also wenn der beaufschlagte Druck größer als der vorgegebene Druckschwellwert ist. Der vorgegebene Druckschwellwert kann auch als Auslöseschwelle bezeichnet werden. Um die Funktion auszulösen, ist es also vorgesehen, dass der Nutzer einen Druck bzw. einen Auslösedruck auf die berührungssensitive Bedieneinheit aufbringt, welcher die Auslöseschwelle überschreitet. Dieser vorgegebene Druckschwellwert wird in Abhängigkeit einer Anzahl an erfassten Objekten verändert bzw. variiert. Mit anderen Worten bedeutet dies, dass ein Druckschwellwert vorgegeben wird, falls der Nutzer die berührungssensitive Bedieneinheit mit nur einem Objekt bzw. nur einem Finger berührt und andere Druckschwellwerte vorgegeben werden können, wenn erfasst wird, dass der Nutzer die berührungssensitive Bedieneinheit mit mehr als einem Objekt bzw. mehr als einem Finger berührt.

Mittels des erfindungsgemäßen Verfahrens kann der Fahrer eine Bedienvorrichtung einfach und ohne Fehlbedienung bedienen und die gewünschte Funktion steuern, auch wenn er, insbesondere versehentlich, die Bedienvorrichtung mit mehr als einem Finger bedient.

Es kann vorgesehen sein, dass als ein jeweiliges Berührsignal jeweils eine elektrische Kapazität zwischen der berührungssensitiven Bedieneinheit und den jeweiligen Objekten erfasst wird. Dazu kann die berührungssensitive Bedieneinheit ein Gitter bildende Elektroden umfassen, welche mit den jeweiligen berührenden Objekten an der jeweiligen Position jeweils einen Kondensator ausbilden. Jeder dieser Kondensatoren weist jeweils eine elektrische Kapazität auf, die durch die berührungssensitive Bedieneinheit ermittelt bzw. gemessen werden kann. Dadurch kann auf besonders einfache Weise eine Position der Objekte auf der berührungssensitiven Bedieneinheit bestimmt werden.

Eine weitere vorteilhafte Ausgestaltung der Erfindung sieht vor, dass jeder Anzahl an Objekten jeweils ein Druckwert zuordnet wird, wobei einer der Druckwerte in Abhängigkeit von der erfassten Anzahl an Objekten als der Druckschwellwert vorgeben wird. Insbesondere können fünf Druckwerte vorgegeben sein, welche zu der erfassten Fingeranzahl einer Hand korrespondieren, mit welchen die berührungssensitive Bedienfläche berührt wird. Somit kann der Druckschwellwert besonders genau eingestellt werden, je nach dem, mit wie vielen Fingern der Nutzer die berührungssensitive Bedieneinheit beim Betätigen berührt.

Es erweist sich als vorteilhaft, wenn der Druckwert bei steigender Anzahl an Objekten erhöht wird. Der Erfindung liegt dabei die Erkenntnis zugrunde, dass bereits jedes Objekt, auch wenn es nicht aktiv auf die berührungssensitive Bedieneinheit drückt, sondern nur aufliegt, bereits einen gewissen Auflagedruck auf die berührungssensitive Bedieneinheit ausübt. Je mehr Objekte also auf der berührungssensitiven Bedieneinheit liegen, desto größer ist der Auflagedruck. Würde nun der Druckschwellwert nicht an die erfasste Anzahl an Objekten angepasst werden, so würde ein Nutzer, welcher die Bedieneinheit mit mehreren Objekten berührt, mit dem betätigenden Objekt einen geringeren Druck ausüben müssen, als wenn er die Bedieneinheit mit nur einem Objekt berühren und betätigen würde, da ja bereits ein gewisser Auflagedruck durch die aufliegenden Objekte auf die berührungssensitive Bedieneinheit ausgeübt wird. Dies könnte Fehlbedienungen zur Folge haben. Aus diesem Grund wird der Druckschwellwert vergrößert, je mehr Objekte die berührungssensitive Bedieneinheit berühren. Dies bedeutet, dass das betätigende Objekt einen grö-ßeren Druck bzw. eine größere Kraft ausüben muss, je mehr aufliegende Objekte auf der berührungssensitiven Bedieneinheit erfasst werden.

In einer weiteren vorteilhaften Ausführungsform der Erfindung wird ein erster Druckwert als der Druckschwellwert vorgegeben, wenn die berührungssensitive Bedieneinheit mit genau einem Objekt berührt wird und ein zweiter Druckwert als der Druckschwellwert vorgegeben, wenn die berührungssensitive Bedieneinheit mit mehr als einem Objekt berührt wird, wobei der erste Druckwert kleiner als der zweite Druckwert ist. In dieser Ausführungsform werden nur diejenigen Fälle unterschieden, in welchen der Nutzer die berührungssensitive Bedieneinheit mit einem einzigen Objekt berührt und in welchen der Nutzer die berührungssensitive Bedieneinheit mit mehr als einem Objekt berührt. Der erste Druckwert kann dabei beispielsweise etwa 3 N betragen und der zweite Druckwert beispielsweise etwa 5 N. Das Verfahren ist somit besonders einfach gestaltet.

Die erfindungsgemäße Bedienvorrichtung für ein Kraftfahrzeug umfasst eine berührungssensitive Bedieneinheit, welche dazu ausgelegt ist, eine Anzahl von Objekten, mit welchen die berührungssensitive Bedieneinheit gleichzeitig berührt wird, zu erfassen, eine Position zu ermitteln, an welcher im Falle nur eines berührenden Objektes die Bedieneinheit mit dem einen Objekt berührt wird, und ein Auslöseobjekt festzulegen sowie eine Position des Auslöseobjektes auf der berührungssensitiven Bedieneinheit in Abhängigkeit von jeweiligen Berührsignalen zu bestimmen, welche im Fall von mehr als einem berührenden Objekt aufgrund der gleichzeitigen Berührung der Objekte erzeugt werden. Die berührungssensitive Bedieneinheit ist dazu ausgelegt, als das Auslöseobjekt aus der Anzahl an erfassten Objekten das Objekt zu ermitteln, dessen Berührungssignal die größte Änderung der Signalstärke aufweist. Darüber hinaus umfasst die Bedienvorrichtung eine Erfassungseinrichtung zum Erfassen eines Druckes, mit welchem die berührungssensitive Bedieneinheit beim Berühren insgesamt beaufschlagt wird, und eine Steuereinrichtung zum Vorgeben eines Druckschwellwerts in Abhängigkeit der erfassten Anzahl der Objekte, zum Ermitteln, ob der erfasste Druck größer als der vorgegebene Druckschwellwert ist und zum Auslösen einer der erfassten Position zugeordneten Funktion des Kraftfahrzeugs ausschließlich, falls der erfasste Druck größer als der vorgegebene Druckschwellwert ist. Die Erfassungseinrichtung kann beispielsweise einen Drucksensor umfassen. Die Steuereinrichtung kann auch ein Steuergerät des Kraftfahrzeugs sein, welches dazu ausgelegt ist, mit der Erfassungseinrichtung und/oder der berührungssensitiven Bedieneinheit zu kommunizieren.

Das erfindungsgemäße Kraftfahrzeug umfasst die erfindungsgemäße Bedienvorrichtung oder eine vorteilhafte Ausführungsform der Bedienvorrichtung. Das Kraftfahrzeug ist vorzugsweise als Personenkraftwagen ausgestaltet.

Die mit Bezug auf das erfindungsgemäße Verfahren vorgestellten bevorzugten Ausführungsformen und deren Vorteile gelten entsprechend für die erfindungsgemäße Bedienvorrichtung sowie das erfindungsgemäße Kraftfahrzeug, wobei die Bedienvorrichtung insbesondere Mittel zur Durchführung der Verfahrensschritte aufweist.

Im Folgenden wird die Erfindung nun anhand eines bevorzugten Ausführungsbeispiels, wie auch unter Bezugnahme auf die beigefügte Zeichnung näher erläutert.

Es zeigen:
- Fig.1: eine schematische Darstellung einer Ausführungsform einer erfindungsgemäßen Bedienvorrichtung bei einer Bedienung mit nur einem Finger;
- Fig. 2: eine schematische Darstellung einer Ausführungsform einer erfindungsgemäßen Bedienvorrichtung bei einer Bedienung mit mehreren Fingern; und
- Fig. 3: eine schematische Darstellung eines Diagramms, in welchem für jeweils verschiedene Anzahlen von Fingern, mit welchen die Bedienvorrichtung bedient wird, jeweilige Druckwerte zugeordnet sind.

Bei dem im Folgenden erläuterten Ausführungsbeispiel handelt es sich um eine bevorzugte Ausführungsform der Erfindung. Bei dem Ausführungsbeispiel stellen aber die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

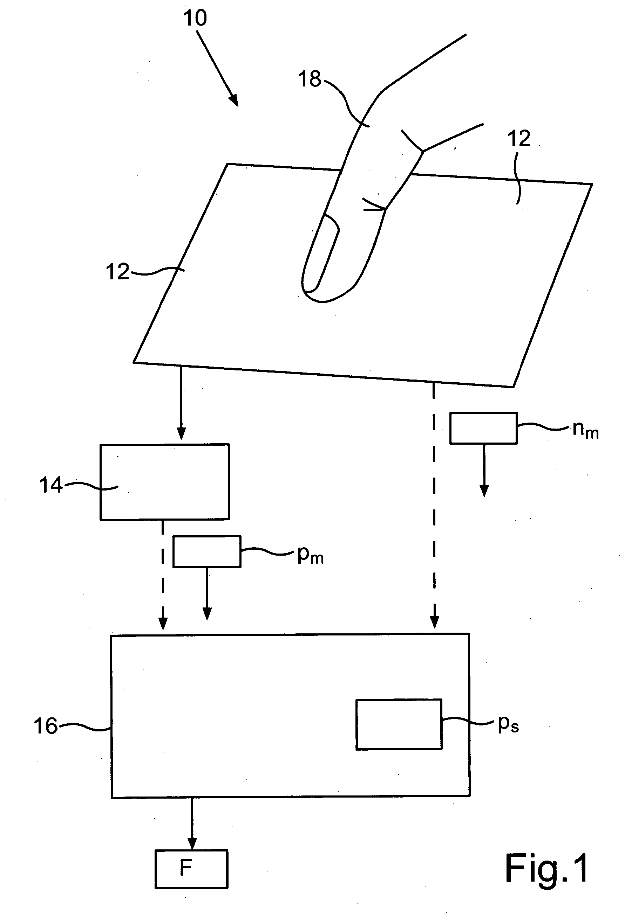

Fig. 1 zeigt eine Bedienvorrichtung 10 zum Auswählen und/oder Auslösen und/oder Steuern von Funktionen F eines hier nicht dargestellten Kraftfahrzeugs. Solche Funktionen F können beispielsweise ein Navigationssystem des Kraftfahrzeugs, eine Multimediaeinrichtung, ein Infotainmentsystem, ein sogenanntes Car-Menü, welches auf einer hier nicht gezeigten Anzeigeeinheit des Kraftfahrzeugs darstellbar ist, oder eine Freisprecheinrichtung des Kraftfahrzeugs betreffen.

Die Bedienvorrichtung 10 kann beispielsweise in einer Mittelkonsole vorgesehen sein, sodass sie insbesondere für einen Fahrer des Kraftfahrzeugs auf einfache Weise bedienbar ist. Die Bedienvorrichtung 10 weist hier eine berührungssensitive Bedieneinheit 12, eine Erfassungseinrichtung 14 und eine Steuereinrichtung 16 auf. Die Erfassungseinrichtung 14 kann beispielsweise als ein an sich bekannter Drucksensor ausgestaltet sein. Die Steuereinrichtung 16 kann auch ein Steuergerät des Kraftfahrzeugs sein, welches dazu ausgelegt ist, mit der berührungssensitiven Bedieneinheit 12 und/oder mit der Erfassungseinrichtung 14 der Bedienvorrichtung 10 zu kommunizieren.

Die berührungssensitive Bedieneinheit 12 ist dazu ausgelegt, eine Anzahl nₘ an Objekten zu erfassen, mit welchen die berührungssensitive Bedieneinheit 12 berührt wird. Die berührungssensitive Bedieneinheit 12 wird insbesondere durch den Nutzer mit seinen Fingern bedient. Somit werden die Finger des Nutzers als die berührenden Objekte erfasst.

Hier wird die berührungssensitive Bedieneinheit 12 mit genau einem Finger 18 berührt. Die Anzahl nₘ der Objekte beträgt hier also eins. Diese Anzahl nₘ wird der Steuereinrichtung 16 bereitgestellt. Darüber hinaus ist die berührungssensitive Bedieneinheit 12 dazu ausgelegt, eine Position zu erfassen, an welcher die berührungssensitive Bedieneinheit 12 mit dem Finger 18 berührt wird. Dies kann beispielsweise über die Messung einer Kapazität erfolgen, welche der Finger 18 an der Position mit der berührungssensitiven Bedieneinheit 12 ausbildet.

Die Erfassungseinrichtung 14 ist dazu ausgelegt, einen Druck pₘ zu erfassen, welchen der Finger 18 auf die berührungssensitive Bedieneinheit 12 ausübt bzw. aufbringt. Dieser von der Erfassungseinrichtung 14 erfasste Druck pₘ wird der Steuereinrichtung 16 bereitgestellt.

Die Steuereinrichtung 16 ist dazu ausgelegt, einen Druckschwellwert pₛ in Abhängigkeit der erfassten Anzahl nₘ zu bestimmen. Die Steuereinrichtung 16 vergleicht den von der Erfassungseinrichtung 14 erfassten Druck pₘ mit dem aktuell vorgegebenen Druckschwellwert pₛ. Falls der erfasste Druck pₘ den Druckschwellwert pₛ überschreitet, ist die Steuereinrichtung 16 dazu ausgelegt, die Funktion F auszuwählen und/oder auszulösen und/oder zu steuern. Die Funktion F wird also nur ausgewählt und/oder ausgelöst und/oder gesteuert, falls der Finger 18 beim Bedienen der Bedienvorrichtung 10 bzw. der berührungssensitiven Bedieneinheit 12 einen Druck pₘ auf die berührungssensitive Bedieneinheit 12 ausübt, welcher den Druckschwellwert pₛ, also eine Auslöseschwelle, überschreitet.

Dabei können die Funktionen F definierten Positionen auf der berührungssensitiven Bedieneinheit 12 zugeordnet sein. Dazu können auf der berührungssensitiven Bedieneinheit 12 beispielsweise hier nicht dargestellte Kennzeichnungen oder Symbole dargestellt sein, welche die der jeweiligen definierten Position zugeordnete Funktion F beschreiben. Der Nutzer übt also auf die berührungssensitive Bedieneinheit 12 an der mit der Kennzeichnung versehenen zugeordneten Position den Druck pₘ aus. Wenn der Druck pₘ den Druckschwellwert pₛ überschreitet, wird die zugehörige Funktion F ausgelöst.

Es kann aber auch vorgesehen sein, dass sich die den Funktionen F zugeordneten Positionen auf der berührungssensitiven Bedieneinheit 12 aus einer Interaktion der berührungssensitiven Bedieneinheit 12 mit einer hier nicht dargestellten Anzeigeeinheit des Kraftfahrzeugs ergeben. Beispielsweise kann ein Mauszeiger durch Berühren der berührungssensitiven Bedieneinheit 12 auf der Anzeigeeinheit gesteuert werden und die berührungssensitive Bedieneinheit 12 mit dem Auslösedruck gedrückt werden, sobald sich der Mauszeiger an der gewünschten Position auf dem Anzeigeelement befindet. So kann eine auf der Anzeigeeinheit dargestellte Funktion mittels des Mauszeigers angewählt und durch Drücken der berührungssensitiven Bedieneinheit 12 ausgewählt und/oder ausgelöst werden. In diesem Fall wird die berührungssensitive Bedieneinheit 12 also wie ein an sich bekanntes Touchpad bedient.

Es ist aber auch möglich, die berührungssensitive Bedieneinheit 12 in Bereiche zu unterteilen, wobei die berührungssensitive Bedieneinheit 12 beispielsweise in einem ersten Bereich wie ein an sich bekanntes Touchpad bedient wird, indem die berührungssensitive Bedieneinheit 12 mit der Anzeigeeinheit interagiert. Auf einem zweiten Bereich der berührungssensitiven Bedieneinheit 12 können beispielsweise Kennzeichnungen auf absoluten Positionen vorgesehen sein, wobei durch Drücken der Bedieneinheit 12 an einer der absoluten Positionen die zugeordnete definierte Funktion auslösbar ist. Diese den vorgegebenen bzw. definierten Funktionen zugeordnete Positionen in dem zweiten Bereich werden auch als sogenannte Preset-Tasten bezeichnet. Eine solche Preset-Taste kann beispielsweise eine Menü-Taste sein, mittels welcher eine Menüsituation auf der Anzeigeeinheit aufgerufen werden kann, oder eine Navigationstaste, mit welcher beispielsweise eine auf der Anzeigeeinheit dargestellte Menüsituation verlassen werden kann.

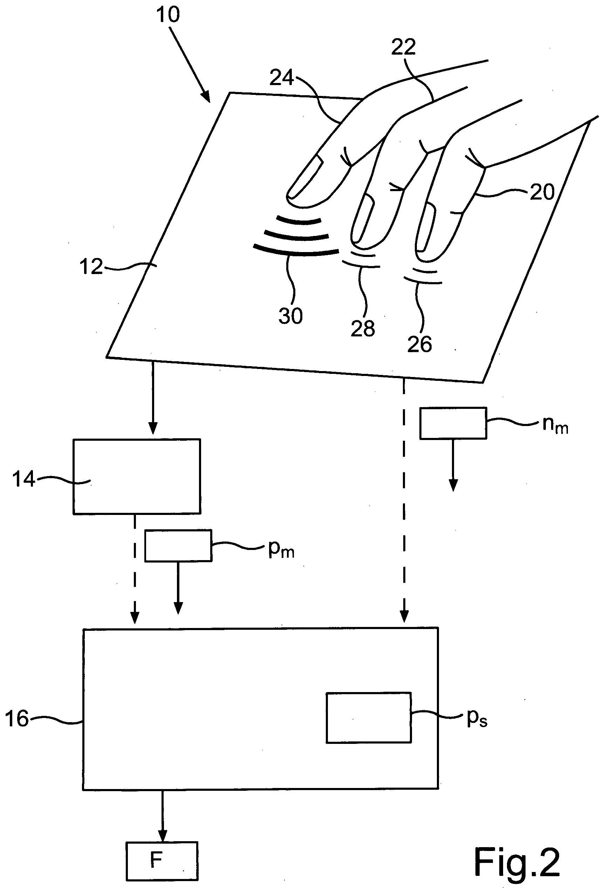

Fig. 2 zeigt die Bedienvorrichtung 10 aus Fig. 1. Hier wird die berührungssensitive Bedieneinheit 12 der Bedienvorrichtung 10 mit drei Fingern 20, 22 und 24 berührt. Die berührungssensitive Bedieneinheit 12 ist dazu ausgelegt, die Anzahl nₘ der Finger zu erfassen, welche hier drei beträgt. Diese Anzahl nₘ wird der Steuereinrichtung 16 bereitgestellt, welche in Abhängigkeit der Anzahl nₘ den Druckschwellwert pₛ bestimmt.

Außerdem ist die berührungssensitive Bedieneinheit 12 dazu ausgelegt, Berührsignale 26, 28 und 30 der Finger 20, 22 und 24 zu erfassen. Die Berührsignale 26, 28 und 30 können beispielsweise elektrische Kapazitäten jeweiliger Kondensatoren sein, die durch die berührungssensitive Bedieneinheit 12 als eine erste Elektrode und die jeweiligen Finger 20, 22, 24 als eine jeweils zweite Elektrode gebildet sind. In diesem Ausführungsbeispiel ist vorgesehen, dass der Finger 24 die Bedienvorrichtung 10 betätigen soll, also der Finger 24 auf die berührungssensitive Bedieneinheit 12 drückt. Die Finger 20 und 22 liegen lediglich auf der berührungssensitiven Bedieneinheit 12 auf. Damit erzeugt der Finger 24 ein im Vergleich zu den Berührsignalen 26 und 28 der Finger 20 und 22 größeres Berührsignal 30. Hier erzeugt der Finger 24 daher das größte Berührsignal 30, weil der Finger 24 "platt gedrückt" wird und sich dadurch eine Berührfläche des Fingers 24 auf der berührungssensitiven Bedieneinheit 12 vergrößert. Der Finger 24 wird hier aufgrund des stärksten Berührsignals 30 als ein Auslöseobjekt festgelegt. Darüber hinaus wird durch die berührungssensitive Bedieneinheit 12 die Position bestimmt, an welcher das Auslöseobjekt, also der Finger 24, die berührungssensitive Bedieneinheit 12 berührt.

Die Erfassungseinrichtung 14 bestimmt den Druck pₘ, welcher durch die Finger 20, 22 und 24 insgesamt auf die berührungssensitive Bedieneinheit 12 aufgebracht wird. Der Druck pₘ wird also global für die gesamte berührungssensitive Bedieneinheit 12 bestimmt. Dieser von der Erfassungseinrichtung 14 erfasste Druck pₘ wird der Steuereinrichtung 16 bereitgestellt.

Die Steuereinrichtung 16 vergleicht den von der Erfassungseinrichtung 14 erfassten Druck pₘ mit dem aktuell vorgegebenen Druckschwellwert pₛ. Falls der erfasste Druck pₘ den Druckschwellwert pₛ überschreitet, ist die Steuereinrichtung 16 dazu ausgelegt, die Funktion F auszuwählen und/oder auszulösen und/oder zu steuern.

Der Druckschwellwert pₛ aus dem Ausführungsbeispiel gemäß Fig. 2 ist dabei insbesondere größer als der Druckschwellwert pₛ aus dem Ausführungsbeispiel gemäß Fig 1. In dem Ausführungsbeispiel gemäß Fig. 2 ist nämlich beispielhaft gezeigt, dass der Nutzer beispielsweise versehentlich die berührungssensitive Bedieneinheit 12 mit mehreren Fingern 20, 22, 24 berührt, aber die Bedieneinheit 12 nur mit dem Finger 24 bedienen möchte, während die anderen Finger 20 und 22 lediglich auf der Bedieneinheit 12 aufliegen. Durch das Aufliegen von mehreren Fingern 20 und 22 wird aber bereits ein erhöhter Druck auf die berührungssensitive Bedieneinheit 12 aufgebracht. Um nun eine versehentliche Bedienung oder Betätigung der Bedienvorrichtung 10 zu vermeiden, wird der Druckschwellwert pₛ angehoben, je mehr Finger auf der berührungssensitiven Bedieneinheit 12 erfasst werden, sodass der betätigende Finger zum Auslösen der Funktion F einen erhöhten Druck ausüben muss.

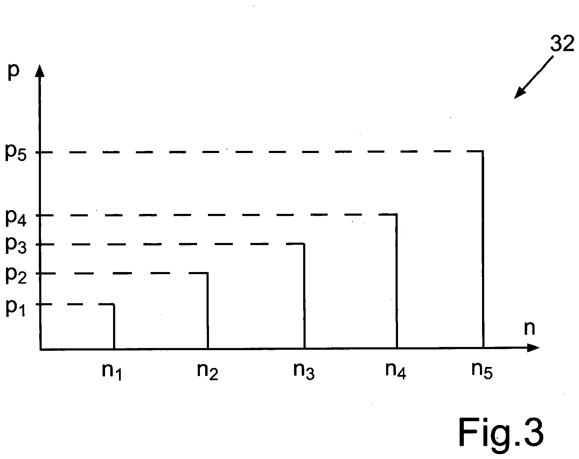

Fig. 3 zeigt beispielhaft ein Diagramm 32, in welchem jeweils verschiedenen Anzahlen n₁, n₂, n₃, n₄, n₅ von Fingern, mit welchen die Bedienvorrichtung 10 bedient wird, jeweilige Druckwerte p₁, p₂, p₃, p₄, p₅ zugeordnet sind. Es wird also ein erster Druckwert p₁ als der Druckschwellwert pₛ bereitgestellt, wenn die berührungssensitive Bedieneinheit 12 mit nur einem Finger berührt wird, also wenn die erfasste Anzahl nₘ gleich n₁ =1 beträgt. Es wird ein zweiter Druckwert p₂ als der Druckschwellwert pₛ bereitgestellt, wenn die berührungssensitive Bedieneinheit 12 mit zwei Fingern berührt wird, also wenn die erfasste Anzahl nₘ gleich n₂ = 2 beträgt, usw. Dabei ist vorgesehen, dass die Druckwerte p₁, p₂, p₃, p₄, p₅ mit steigender Anzahl an Objekten n₁, n₂, n₃, n₄, n₅ erhöht werden. Einer der Druckwerte p₁, p₂, p₃, p₄, p₅ wird in Abhängigkeit der erfassten Anzahl nₘ an Objekten als der Druckschwellwert pₛ gewählt bzw. vorgegeben. Dies bedeutet, dass das als Auslöseobjekt festgelegte Objekt umso stärker auf die berührungssensitive Bedieneinheit 12 drücken muss, je mehr Objekte erfasst werden, also je größer die Anzahl nₘ an erfassten Objekten ist.

## Patentansprüche

1. Verfahren zum Betreiben einer Bedienvorrichtung (10) eines Kraftfahrzeugs, mit den Schritten:
- Erfassen einer Anzahl (nₘ) von Objekten (18, 20, 22, 24), mit welchen eine berührungssensitive Bedieneinheit (12) gleichzeitig berührt wird,
- Bestimmen einer Position, an welcher im Falle nur eines berührenden Objektes (18) die Bedieneinheit (12) mit dem einen Objekt (18) berührt wird, oder Festlegen eines Auslöseobjektes (24) sowie Bestimmen einer Position des Auslöseobjektes (24) auf der berührungssensitiven Bedieneinheit (12) in Abhängigkeit von jeweiligen Berührsignalen (26, 28, 30), welche im Fall von mehr als einem berührenden Objekt (20, 22, 24) aufgrund der gleichzeitigen Berührung der Objekte (20, 22, 24) erzeugt werden, wobei als das Auslöseobjekt (24) aus der Anzahl (nₘ) an erfassten Objekten (20, 22, 24) das Objekt (24) ermittelt wird, dessen Berührungssignal (30) die größte Änderung der Signalstärke über eine Zeit aufweist;
- Vorgeben eines Druckschwellwerts (pₛ) in Abhängigkeit der erfassten Anzahl (nₘ) der Objekte (18, 20, 22, 24);
- Erfassen eines Druckes (pₘ), mit welchem die berührungssensitive Bedieneinheit (12) beim Berühren insgesamt beaufschlagt wird;
- Ermitteln, ob der erfasste Druck (pₘ) größer als der vorgegebene Druckschwellwert (pₛ) ist;
- Auslösen einer der erfassten Position zugeordneten Funktion (F) des Kraftfahrzeugs ausschließlich, falls der erfasste Druck (pₘ) größer als der vorgegebene Druckschwellwert (pₛ) ist.

2. Verfahren nach Anspruch 1,
**dadurch gekennzeichnet, dass**
als ein jeweiliges Berührsignal (26, 28, 30) jeweils eine elektrische Kapazität zwischen der berührungssensitiven Bedieneinheit (12) und den jeweiligen Objekten (20, 22, 24) erfasst wird.

3. Verfahren nach einem der vorhergehenden Ansprüche,
**dadurch gekennzeichnet, dass**
jeder Anzahl (n) an Objekten jeweils ein Druckwert (p) zuordnet wird, wobei einer der Druckwerte in Abhängigkeit von der erfassten Anzahl (nₘ) an Objekten (18, 20, 22, 24) als der Druckschwellwert vorgegeben wird.

4. Verfahren nach Anspruch 3,
**dadurch gekennzeichnet, dass**
der Druckwert (p) bei steigender Anzahl (n) an Objekten erhöht wird.

5. Verfahren nach Anspruch 1 oder 2,
**dadurch gekennzeichnet, dass**
ein erster Druckwert als der Druckschwellwert (pₛ) vorgegeben wird, wenn die berührungssensitive Bedieneinheit (12) mit genau einem Objekt (18) berührt wird, und ein zweiter Druckwert als der Druckschwellwert (pₛ) vorgegeben wird, wenn die berührungssensitive Bedieneinheit (12) mit mehr als einem Objekt (20, 22, 24) berührt wird, wobei der erste Druckwert kleiner als der zweite Druckwert ist.

6. Bedienvorrichtung (10) für ein Kraftfahrzeug mit
- einer berührungssensitiven Bedieneinheit (12), welche dazu ausgelegt ist, eine Anzahl (nₘ) von Objekten (18, 20, 22, 24), mit welchen die berührungssensitive Bedieneinheit (12) gleichzeitig berührt wird, zu erfassen, eine Position zu ermitteln, an welcher im Falle nur eines berührenden Objektes (18) die Bedieneinheit (12) mit dem einen Objekt (18) berührt wird, und ein Auslöseobjekt (24) festzulegen, sowie eine Position des Auslöseobjektes (24) auf der berührungssensitiven Bedieneinheit (12) in Abhängigkeit von jeweiligen Berührsignalen (26, 28, 30) zu bestimmen, welche im Fall von mehr als einem berührenden Objekt (20, 22, 24) aufgrund der gleichzeitigen Berührung der Objekte (20, 22, 24) erzeugt werden, wobei die berührungssensitive Bedieneinheit (12) dazu ausgelegt ist, als das Auslöseobjekt (24) aus der Anzahl (nₘ) an erfassten Objekten (20, 22, 24) das Objekt (24) zu ermitteln, dessen Berührungssignal (30) die größte Änderung der Signalstärke über eine Zeit aufweist;
- einer Erfassungseinrichtung (14) zum Erfassen eines Druckes (pₘ), mit welchem die berührungssensitive Bedieneinheit (12) beim Berühren insgesamt beaufschlagt wird;
- einer Steuereinrichtung (16) zum Vorgeben eines Druckschwellwerts (pₛ) in Abhängigkeit der erfassten Anzahl (nₘ) der Objekte (18, 20, 22, 24), zum Ermitteln, ob der erfasste Druck (pₘ) größer als der vorgegebene Druckschwellwert (pₛ) ist und zum Auslösen einer der erfassten Position zugeordneten Funktion (F) des Kraftfahrzeugs ausschließlich, falls der erfasste Druck (pₘ) größer als der vorgegebene Druckschwellwert (pₛ) ist.

7. Kraftfahrzeug mit einer Bedienvorrichtung (10) nach Anspruch 6.

## Claims

1. A method for operating an actuation device (10) of a motor vehicle, comprising the steps:
- capturing a number (nₘ) of objects (18, 20, 22, 24), with which a touch-sensitive actuation unit (12) is simultaneously touched,
- determining a position, in which, in case of only one touching object (18), the actuation unit (12) is touched with the one object (18), or setting a triggering object (24) as well as determining a position of the triggering object (24) on the touch-sensitive actuation unit (12) depending on respective touch signals (26, 28, 30), which, in case of more than one touching object (20, 22, 24), are generated due to the simultaneous touch of the objects (20, 22, 24), wherein that object (24) is ascertained as the triggering object (24) from the number (nₘ) of the captured objects (20, 22, 24), the touch signal (30) of which has the greatest change of the signal strength over a time;
- presetting a pressure threshold value (pₛ) depending on the captured number (nₘ) of the objects (18, 20, 22, 24);
- capturing a pressure (pₘ), with which the touch-sensitive actuation unit (12) is overall applied in touching;
- ascertaining if the captured pressure (pₘ) is greater than the preset pressure threshold value (pₛ);
- triggering a function (F) of the motor vehicle associated with the captured position exclusively if the captured pressure (pₘ) is greater than the preset pressure threshold value (pₛ).

2. The method according to claim 1,
**characterized in that**
an electrical capacitance between the touch-sensitive actuation unit (12) and the respective objects (20, 22, 24) is respectively captured as a respective touch signal (26, 28, 30).

3. The method according to any one of the preceding claims,
**characterized in that**
a pressure value (p) is respectively associated with each number (n) of objects, wherein one of the pressure values is preset as the pressure threshold value depending on the captured number (nₘ) of objects (18, 20, 22, 24).

4. The method according to claim 3,
**characterized in that**
the pressure value (p) is increased with increasing number (n) of objects.

5. The method according to claim 1 or 2,
**characterized in that**
a first pressure value is preset as the pressure threshold value (pₛ) if the touch-sensitive actuation unit (12) is touched with exactly one object (18), and a second pressure value is preset as the pressure threshold value (pₛ) if the touch-sensitive actuation unit (12) is touched with more than one object (20, 22, 24), wherein the first pressure value is less than the second pressure value.

6. An actuation device (10) for a motor vehicle, comprising
- a touch-sensitive actuation unit (12), which is configured to capture a number (nₘ) of objects (18, 20, 22, 24), with which the touch-sensitive actuation unit (12) is simultaneously touched, to ascertain a position, in which, in case of only one touching object (18), the actuation unit (12) is touched with the one object (18), and to set a triggering object (24), as well as to determine a position of the triggering object (24) on the touch-sensitive actuation unit (12) depending on respective touch signals (26, 28, 30), which, in case of more than one touching object (20, 22, 24), are generated due to the simultaneous touch of the objects (20, 22, 24), wherein the touch-sensitive actuation unit (12) is configured to ascertain that object (24) as the triggering object (24) from the number (nₘ) of captured objects (20, 22, 24), the touch signal (30) of which has the greatest change of the signal strength over a time;
- a capturing device (14) for capturing a pressure (pₘ), with which the touch-sensitive actuation unit (12) is overall applied in touching;
- a control device (16) for presetting a pressure threshold value (pₛ) depending on the captured number (nₘ) of the objects (18, 20, 22, 24), for ascertaining if the captured pressure (pₘ) is greater than the preset pressure threshold value (pₛ) and for triggering a function (F) of the motor vehicle associated with the captured position exclusively if the captured pressure (pₘ) is greater than the preset pressure threshold value (pₛ).

7. A motor vehicle with an actuation device (10) according to claim 6.

## Revendications

1. Procédé pour faire fonctionner un dispositif de commande (10) d'un véhicule à moteur, comportant les étapes consistant à :
- détecter un nombre (nₘ) d'objets (18, 20, 22, 24) touchant simultanément une unité de commande tactile (12),
- déterminer une position dans laquelle, en cas de toucher par un seul objet (18), l'unité de commande (12) est touchée par ledit objet (18), ou définir un objet déclencheur (24) et déterminer une position de l'objet déclencheur (24) sur l'unité de commande tactile (12) en fonction de signaux tactiles (26, 28, 30) respectifs qui, en cas de toucher par plusieurs objets (20, 22, 24), sont générés en raison du toucher simultané des objets (20, 22, 24), l'objet (24) étant déterminé comme étant l'objet déclencheur (24) parmi le nombre (nₘ) d'objets (20, 22, 24) détectés, le signal tactile (30) de l'objet ayant la plus grande variation d'intensité de signal en fonction du temps ;
- prédéfinir une valeur de seuil de pression (pₛ) en fonction du nombre (nₘ) détecté d'objets (18, 20, 22, 24) ;
- détecter une pression (pₘ) globale appliquée sur l'unité de commande tactile (12) en cas de toucher ;
- déterminer si la pression (pₘ) détectée est supérieure à la valeur de seuil de pression (pₛ) prédéfinie ;
- déclencher une fonction (F) associée à la position détectée du véhicule à moteur uniquement si la pression (pₘ) détectée est supérieure à la valeur de seuil de pression (pₛ) prédéfinie.

2. Procédé selon la revendication 1,
**caractérisé en ce que**
une capacité électrique entre l'unité de commande tactile (12) et chaque objet (20, 22, 24) est respectivement détectée comme un signal tactile (26, 28, 30) respectif.

3. Procédé selon l'une des revendications précédentes,
**caractérisé en ce que**
une valeur de pression (p) est respectivement affectée à chaque nombre (n) d'objets, l'une des valeurs de pression étant prédéfinie en tant que valeur de pression de seuil en fonction du nombre (nₘ) détecté d'objets (18, 20, 22, 24).

4. Procédé selon la revendication 3,
**caractérisé en ce que**
la valeur de pression (p) est augmentée lorsque le nombre (n) d'objets augmente.

5. Procédé selon la revendication 1 ou 2,
**caractérisé en ce que**
une première valeur de pression est prédéfinie en tant que valeur de seuil de pression (pₛ), lorsque l'unité de commande tactile (12) est touchée par un seul objet (18), et une seconde valeur de pression est prédéfinie en tant que valeur de seuil de pression (pₛ), lorsque l'unité de commande tactile (12) est touchée par plus d'un objet (20, 22, 24), la première valeur de pression étant inférieure à la seconde valeur de pression.

6. Dispositif de commande (10) pour un véhicule à moteur, comportant :
- une unité de commande tactile (12) conçue pour détecter un nombre (nₘ) d'objets (18, 20, 22, 24) touchant simultanément l'unité de commande tactile (12), déterminer une position dans laquelle, en cas de toucher par un seul objet (18), l'unité de commande (12) est touchée par ledit objet (18), et déterminer un objet déclencheur (24) ainsi qu'une position de l'objet déclencheur (24) sur l'unité de commande tactile (12) en fonction de signaux tactiles (26, 28, 30) respectifs qui, en cas de toucher par plus d'un objet (20, 22, 24), sont générés en raison du toucher simultané des objets (20, 22, 24), l'unité de commande tactile (12) étant conçue pour déterminer l'objet (24) en tant qu'objet déclencheur (24) parmi le nombre (nₘ) d'objets (20, 22, 24) détectés, le signal tactile (30) de l'objet ayant la plus grande variation d'intensité de signal en fonction du temps ;
- un dispositif de détection (14) pour détecter une pression (pₘ) globale appliquée sur l'unité de commande tactile (12) lors du toucher ;
- un dispositif de commande (16) pour prédéfinir une valeur de seuil de pression (pₛ) en fonction du nombre (nₘ) détecté d'objets (18, 20, 22, 24), afin de déterminer si la pression (pₘ) détectée est supérieure à la valeur de seuil de pression (pₛ) prédéfinie et de déclencher une fonction (F) associée à la position détectée du véhicule à moteur uniquement si la pression (pₘ) détectée est supérieure à la valeur de seuil de pression (pₛ) prédéfinie.

7. Véhicule à moteur comportant un dispositif de commande (10) selon la revendication 6.
